# EUROPEAN PATENT APPLICATION

(11) **EP 4 815 439 A1**
(43) Date of publication of application: **30.09.2026**
(21) Application number: 26167105.1
(22) Date of filing: 24.03.2026
(51) Int. Cl.: H04N 9/31

(54) **PROCESSING METHOD, INFORMATION PROCESSING APPARATUS, AND NON-TRANSITORY COMPUTER-READABLE STORAGE MEDIUM STORING PROGRAM**

(30) Priority: 26.03.2025 JP 2025052199
(71) Applicant: Seiko Epson Corporation, Tokyo 160-8801 (JP)
(72) Inventor: FURUI, Shiki, Suwa-shi, 392-8502 (JP)
(74) Representative: Lewis Silkin LLP

(57) **Abstract**

A projector includes a correction value calculator and an image analyzer. The image analyzer acquires a coordinate value of each of a plurality of correction points respectively defining a plurality of correction regions for correcting the shape of a projection video. The correction value calculator calculates, based on a plurality of coordinate values, a correction value for correcting the shape of each of a plurality of divided regions that divide the inside of each of the plurality of correction regions. The correction value calculator specifies a first correction region closest to a first divided region, which is a divided region exceeding a correction limit, among the plurality of correction regions. Then, the correction value calculator smooths a first coordinate value, which corresponds to a first correction point among at least four correction points defining the first correction region, based on the first coordinate value and a coordinate value of each of a plurality of correction points adjacent to the first correction point.

## Description

The present application is based on, and claims priority from JP Application Serial Number 2025-052199, filed March 26, 2025, the disclosure of which is hereby incorporated by reference herein in its entirety.

### BACKGROUND

### 1. Technical Field

The present disclosure relates to a processing method, an information processing apparatus, and a non-transitory computer-readable storage medium storing a program.

### 2. Related Art

JP-A-2023-61557 discloses a projector in which a processing circuit calculates, based on the positions of a plurality of adjustment points, linear coordinates by linear interpolation or nonlinear coordinates by nonlinear interpolation between the plurality of adjustment points and a geometric correction circuit carries out geometric correction for an image based on the linear coordinates or the nonlinear coordinates.

JP-A-2023-61557 is an example of the related art.

All calculation results of the processing circuit based on the positions of the plurality of adjustment points are sometimes not appropriate results for the geometric correction circuit. For example, some of the calculation results of the processing circuit are sometimes inapplicable results depending on, for example, the performance of the geometric correction circuit. In this case, it is conceivable to readjust the positions of the plurality of adjustment points such that the calculation results of the processing circuit are appropriate results for the geometric correction circuit. However, the positions of the adjustment points relating to the shape of the image are rather deteriorated simply by adjusting the positions of the plurality of adjustment points.

### SUMMARY

According to an aspect of the present disclosure, there is provided a processing method including one or a plurality of processors: projecting an image onto a target with a projector; acquiring a plurality of coordinate values corresponding one-to-one to a plurality of correction points respectively defining a plurality of correction regions for correcting a shape of the image in a coordinate system of a light modulation element; calculating, based on the plurality of coordinate values, a parameter for correcting the shape for each of a plurality of divided regions that divide an inside of each of the plurality of correction regions; specifying, among the plurality of correction regions, a first correction region closest to a first divided region having a parameter exceeding a threshold among the plurality of divided regions; and executing a smoothing operation for smoothing a first coordinate value, which corresponds to a first correction point among at least four correction points defining the first correction region, based on the first coordinate value and a plurality of coordinate values corresponding one-to-one to the plurality of correction points adjacent to the first correction point.

According to an aspect of the present disclosure, there is provided an information processing apparatus including: a communication device configured to communicate with a projector; and a processing device, wherein the processing device executes: projecting an image onto a target with the projector; acquiring a plurality of coordinate values corresponding one-to-one to a plurality of correction points respectively defining a plurality of correction regions for correcting a shape of the image in a coordinate system of a light modulation element; calculating, based on the plurality of coordinate values, a parameter for correcting the shape for each of a plurality of divided regions that divide an inside of each of the plurality of correction regions; specifying, among the plurality of correction regions, a first correction region closest to a first divided region having a parameter exceeding a threshold among the plurality of divided regions; and executing a smoothing operation for smoothing a first coordinate value, which corresponds to a first correction point among at least four correction points defining the first correction region, based on the first coordinate value and a plurality of coordinate values corresponding one-to-one to the plurality of correction points adjacent to the first correction point.

According to an aspect of the present disclosure, there is provided a non-transitory computer-readable storage medium storing a program for causing a computer to execute: projecting an image onto a target with a projector; acquiring a plurality of coordinate values corresponding one-to-one to a plurality of correction points respectively defining a plurality of correction regions for correcting a shape of the image in a coordinate system of a light modulation element; calculating, based on the plurality of coordinate values, a parameter for correcting the shape for each of a plurality of divided regions that divide an inside of each of the plurality of correction regions; specifying, among the plurality of correction regions, a first correction region closest to a first divided region having a parameter exceeding a threshold among the plurality of divided regions; and executing a smoothing operation for smoothing a first coordinate value, which corresponds to a first correction point among at least four correction points defining the first correction region, based on the first coordinate value and a plurality of coordinate values corresponding one-to-one to the plurality of correction points adjacent to the first correction point.

### BRIEF DESCRIPTION OF THE DRAWINGS

FIG. 1 is a diagram illustrating a configuration example of a projection system including a projector that executes a processing method of the present disclosure.
FIG. 2 is a diagram illustrating a configuration example of the projector.
FIG. 3 is a diagram illustrating an example of a pattern for performing geometric correction.
FIG. 4 is a diagram illustrating an example of a pattern for performing geometric correction.
FIG. 5 is a diagram illustrating a relationship between a correction shape and divided regions.
FIG. 6 is a flowchart illustrating a flow of processing in a processing method executed by a processing device of the projector according to a program.
FIG. 7 is a flowchart illustrating a flow of processing in a smoothing operation executed by the processing device of the projector.
FIG. 8 is a diagram illustrating an example of a target region of the smoothing operation.
FIG. 9 is a flowchart illustrating a flow of processing executed by the processing device of the projector in a third smoothing operation.
FIG. 10 is a diagram illustrating an example of an operation result of the third smoothing operation.
FIG. 11 is a flowchart illustrating a flow of processing executed by the processing device of the projector in a first smoothing operation.
FIG. 12 is a diagram illustrating an example of an operation result of the first smoothing operation.
FIG. 13 is a flowchart illustrating a flow of processing executed by the processing device of the projector in a second smoothing operation.
FIG. 14 is a diagram illustrating an example of an operation result of the second smoothing operation.
FIG. 15 is a flowchart illustrating a flow of processing in the third smoothing operation in a modification (1).

### DESCRIPTION OF EMBODIMENTS

Various technically preferable limitations are added to an embodiment explained below. However, embodiments of the present disclosure are not limited to the embodiment explained below.

### A. Embodiment

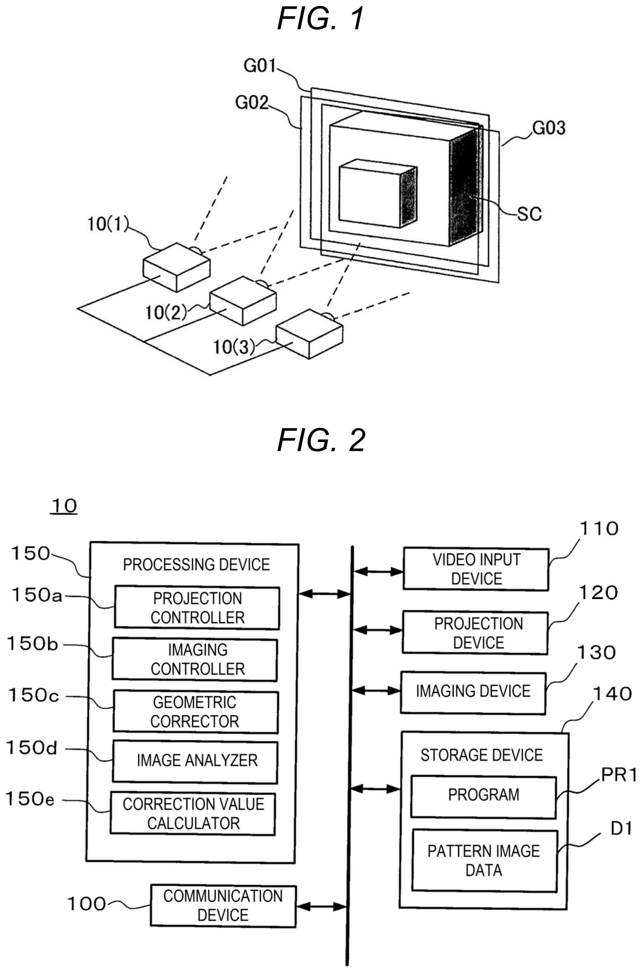

FIG. 1 is a diagram illustrating a configuration example of a projection system 1 including a projector 10(1) that executes a processing method of the present disclosure. As illustrated in FIG. 1, the projection system 1 includes a projector 10(2) and a projector 10(3) besides the projector 10(1). Each of the projector 10(2) and the projector 10(3) is coupled to the projector 10(1) via, for example, a communication cable.

The projection system 1 is a system for implementing projection mapping by projecting an image onto a projection target object SC from each of the projector 10(1), the projector 10(2), and the projector 10(3). As illustrated in FIG. 2, the projection target object SC in the present embodiment is not a planar object such as a projection screen but has a three-dimensional shape. Specific examples of the projection target object SC include a building. In the present embodiment, the projector 10(1) projects an image G01 onto the projection target object SC. Then, the projector 10(2) projects (hereinafter, stacks) an image G02 to at least partially overlap the image G01 and the projector 10(3) stacks an image G03 to at least partially overlap the image G01, whereby the projection mapping is implemented. The image G02 and the image G03 overlap the image G01.

All of the projector 10(1), the projector 10(2), and the projector 10(3) have the same configuration. Hereinafter, when it is unnecessary to distinguish the projector 10(1), the projector 10(2), and the projector 10(3), the projector 10(1), the projector 10(2), and the projector 10(3) are referred to as projector 10. Three projectors 10 are provided in the projection system 1 illustrated in FIG. 1. However, the number of projectors 10 provided in the projection system 1 may be two or may be four or more.

FIG. 2 is a diagram illustrating a configuration example of the projector 10. As illustrated in FIG. 2, the projector 10 includes a communication device 100, a video input device 110, a projection device 120, an imaging device 130, a storage device 140, and a processing device 150. Each of the communication device 100, the video input device 110, the projection device 120, the imaging device 130, and the storage device 140 is coupled to the processing device 150 via a bus (not illustrated in FIG. 2). The projector 10 includes, besides the elements illustrated in FIG. 2, an input device for receiving input operation of a user. However, since the input device is not closely related to the present disclosure, detailed explanation of the input device is omitted.

The communication device 100 includes a communication interface circuit. Another device is coupled to the communication device 100 via the communication cable explained above. In the present embodiment, the other device for the projector 10(1) is the projector 10(2) or the projector 10(3). Similarly, the other device for the projector 10(2) is the projector 10(1) or the projector 10(3). The other device for the projector 10(3) is the projector 10(2) or the projector 10(1). The communication device 100 delivers data received from the other device via the communication cable to the processing device 150 and, on the other hand, transmits data given from the processing device 150 to the other device. The communication device 100 is an example of a communication apparatus.

A video supply device is coupled to the video input device 110 via a signal line such as a communication cable. In FIG. 1, illustration of the video supply device is omitted. In the present embodiment, an analog signal (hereinafter, a video signal) representing a video to be projected by the projector 10 is input to the video input device 110 from the video supply device via the communication cable. Although detailed illustration is omitted in FIG. 1, the video input device 110 includes an A/D converter. The video input device 110 applies A/D conversion to the video signal input from the video supply device using the A/D converter and gives a digital signal (hereinafter, video data), which is a result of the conversion, to the processing device 150. Hereinafter, the video represented by the video data is referred to as projection target video.

Although detailed illustration is omitted in FIG. 2, the projection device 120 includes a light source lamp, a display panel, and a lens. The display panel is configured by arraying, in a matrix, a plurality of pixels capable of modulating light of the light source lamp according to video data. Specific examples of the display panel include a liquid crystal panel. The display panel is an example of a light modulation element and may be a digital mirror device. The resolution of the display panel in the present embodiment is WUXGA(1920×1200) but may be other resolutions. A video is drawn on the display panel by the processing device 150. Although details are explained later, examples of the video drawn on the display panel by the processing device 150 include an image of a pattern for correcting the projection target video according to a three-dimensional shape of the projection target object SC. Other examples of the video drawn on the display panel by the processing device 150 include a corrected projection target video obtained by applying geometric correction corresponding to the three-dimensional shape of the projection target object SC to the projection target video. Light emitted from the light source lamp passes through the display panel. Accordingly, image light modulated according to the video drawn on the display panel is generated. The image light is projected onto the projection target object SC via the lens, whereby a video represented by the image light is displayed on the projection target object SC.

The imaging device 130 includes a CMOS (Complementary Metal-Oxide-Semiconductor) image sensor or a CCD (Charge Coupled Device) image sensor. In the present embodiment, the imaging device 130 images an imaging region under the control of the processing device 150. In the present embodiment, the projector 10 is installed such that the entire projection target object SC fits in the imaging region of the imaging device 130. The imaging device 130 captures an image of an imaging range under the control of the processing device 150 and gives captured image data representing the captured image to the processing device 150.

The storage device 140 includes a nonvolatile memory such as a flash read-only memory (ROM) and a volatile memory such as a random access memory (RAM). The nonvolatile memory of the storage device 140 stores a program PR1 for causing the processing device 150 to function as a control center of the projector 10 and pattern image data D1 representing the image of the pattern explained above. The volatile memory of the storage device 140 is used by the processing device 150 as a work area when the program PR1 is executed.

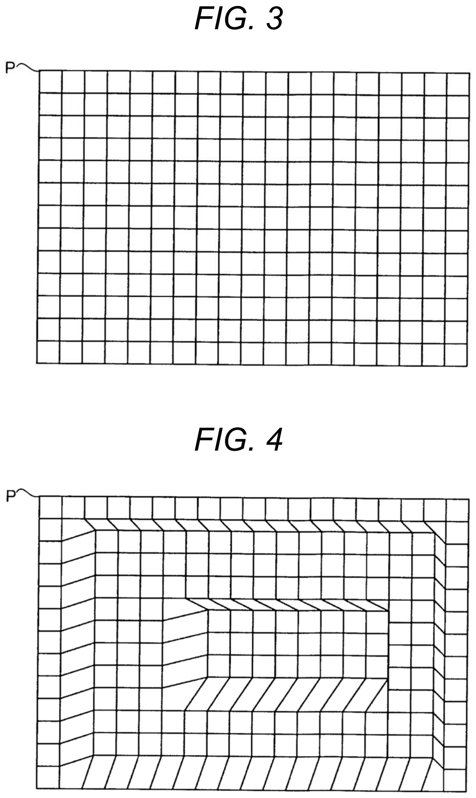

FIG. 3 is a diagram illustrating an example of the pattern indicated by the pattern image data D1. The pattern in the present embodiment includes 20×14 grid points equally divided by 19×13. The pattern is drawn on the entire display panel of the projection device 120. The user can designate a correction amount in the geometric correction for the projection target video for each of the positions of the grid points by performing, according to a three-dimensional shape of the projection target object SC, for example, as illustrated in FIG. 4, input operation of changing the positions of the grid points included in the pattern displayed on the projection target object SC. Hereinafter, each of the 20×14 grid points included in the pattern indicated by the pattern image data D1 is referred to as correction point P.

The processing device 150 includes one or a plurality of processors. The processor includes, for example, a central processing unit (CPU). The processing device 150 is an example of a computer in the present disclosure. At the opportunity when the projector 10 is turned on, the processing device 150 reads the program PR1 from the nonvolatile memory to the volatile memory and starts executing the program PR1 read to the volatile memory. The processing device 150 operating according to the program PR1 functions as a projection controller 150a, an imaging controller 150b, a geometric corrector 150c, an image analyzer 150d, and a correction value calculator 150e. The processing device 150 is an example of a processing apparatus.

The projection controller 150a controls the projection device 120 to project a video onto the projection target object SC. For example, when projecting an image of a measurement pattern onto the projection target object SC, the projection controller 150a reads the pattern image data D1 from the storage device 140 and draws the image represented by the pattern image data D1 on the display panel of the projection device 120 to thereby cause the projection device 120 to project the image of the measurement pattern onto the projection target object SC. When projecting a projection target video onto the projection target object SC, the projection controller 150a draws a corrected projection target video on the display panel of the projection device 120 to thereby cause the projection device 120 to project the corrected projection target video onto the projection target object SC. As explained in detail below, the corrected projection target video is generated by the geometric corrector 150c.

The imaging controller 150b controls the imaging device 130 to image the projection target object SC. As explained in detail below, in the present embodiment, the imaging controller 150b causes the imaging device 130 to image the projection target object SC onto which the image of the pattern explained above is projected.

The geometric corrector 150c applies geometric correction corresponding to a correction value calculated by the correction value calculator 150e to video data given from the video input device 110 to generate corrected video data representing a corrected video. Details of the geometric correction by the geometric corrector 150c will be clarified below. In the present embodiment, the processing device 150 operating according to the program PR1 functions as the geometric corrector 150c. However, the geometric corrector 150c may be implemented by an image processor. The image processor refers to a digital signal processor (DSP) specialized for image processing.

The image analyzer 150d analyzes an image represented by image data acquired from the imaging device 130 to thereby calculate a measurement value representing a measurement result of a three-dimensional shape of the projection target object SC. In the present embodiment, at the opportunity when input operation for instructing pattern change completion is performed on the input device, the image analyzer 150d analyzes an image captured by the imaging device 130 at that time point to thereby calculate, for each of 20×14 correction points included in the image, a difference between the correction point and coordinates (coordinates on the display panel) corresponding to each other in a pattern not corrected. The difference for each of the 20×14 correction points is the measurement value explained above. In the technique disclosed in JP-A-2023-61557, only coordinates that four corners of a video overlap are measured. However, in an example of the present embodiment, the correction value can be calculated by applying the same technique to calculate coordinates overlapping the 20×14 correction points.

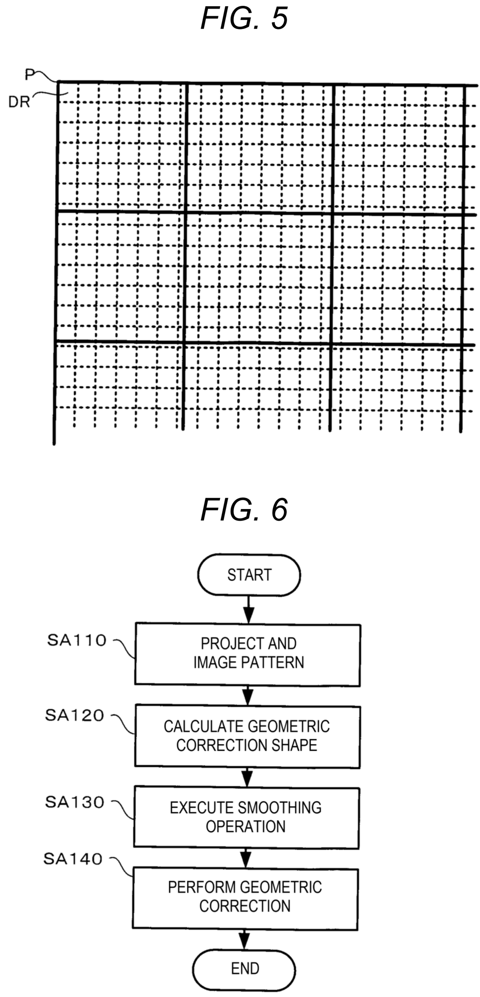

The correction value calculator 150e calculates, based on the measurement value calculated by the image analyzer 150d, a correction value in geometric correction for correcting the shape of a projection video according to the three-dimensional shape of the projection target object SC. More specifically, first, the correction value calculator 150e sets a correction shape based on the pattern not corrected (see FIG. 3). The correction shape refers to a minimum rectangle having four correction points P as four corners and is an example of a correction region in the present disclosure. In the present embodiment, the shape of the entire projection video is specified by a collection of a plurality of correction shapes. The correction value calculator 150e sets divided regions DR with respect to the set correction shape. The number of pixels of each divided region DR is 16[pix]×16[pix]. In FIG. 5, the correction shape is delimited by solid lines and the divided regions are delimited by dotted lines. The geometric corrector 150c executes geometric correction for each of the divided regions. In the present embodiment, a total number of divided regions DR is not an integer multiple of a total number of correction shapes but is not particularly limited. If the correction shape is divided into two or more regions, the total number of divided regions DR is not particularly limited.

Subsequently, the correction value calculator 150e deforms the correction shape based on the measurement value calculated by the image analyzer 150d and calculates, for each of the divided regions, a shape of the deformed divided region. Then, the correction value calculator 150e determines whether the shape of the deformed divided region has exceeded a correction limit. Specifically, the correction value calculator 150e checks the lengths (enlargement ratios and reduction ratios) of the four sides of the deformed divided region, the inclinations of the four sides, the presence or absence of inversion of the sizes of coordinates of the vertices of the deformed divided region, and the like. The lengths (the enlargement ratios and the reduction ratios) of the four sides of the divided region, the inclinations of the four sides, and the coordinates of the vertexes of the divided region are correction values representing correction amounts of the divided regions in the geometric correction and are examples of a parameter in the present disclosure. When the length of at least one of the four sides of the deformed divided region has exceeded a predetermined value, the correction value calculator 150e determines that the shape of the deformed divided region has exceeded the correction limit. Similarly, when the inclination of at least one of the four sides of the deformed divided region has exceeded a predetermined value or when the number of vertices in which the size relationship of the coordinates is reversed has exceeded a predetermined value, the correction value calculator 150e determines that the shape of the deformed divided region has exceeded the correction limit.

When at least one divided region has exceeded the correction limit, the geometric corrector 150c does not generate corrected video data. For this reason, when there is a divided region exceeding the correction limit, the correction value calculator 150e smooths the correction shape such that there is no divided region exceeding the correction limit and updates the shapes of the divided regions according to a result of the smoothing to update the correction value in the geometric correction. Examples of the smoothing of the correction shape include performing moving average in the vertical direction or the horizontal direction for coordinate values of the correction points specifying the correction shape, that is, sequentially replacing the coordinate values of the correction points with moving average values.

For example, when a correction value is calculated by the correction value calculator 150e of the projector 10(1), the correction value calculator 150e of the projector 10(1) transmits the correction value to each of the projector 10(2) and the projector 10(3) using the communication device 100. Each of the projector 10(2) and the projector 10(3) determines, based on the correction value, a correction shape in geometric correction for a projection video at the time when performing stacking in projection mapping. For example, the correction value calculator 150e of the projector 10(2) determines four coordinate values corresponding one-to-one to four correction points defining the correction shape in the image G02 to coincide with four coordinate values corresponding one-to-one to four correction points defining a corresponding correction shape in the projector 10(1). The same applies to the projector 10(3). Accordingly, it is possible to minimize the influence of the stacking on overlay accuracy and avoid a correction limit of a geometric correction circuit. When stacking using a plurality of projectors 10 is not performed and the projector 10 is used alone, the transmission of the correction value using the communication device 100 is omitted. If a correspondence relationship between a coordinate system of a display panel provided in the projector 10(1) and a coordinate system of a display panel provided in the projector 10(2) is known, the correction value calculator 150e of the projector 10(1) may determine the four coordinate values in the image G02 corresponding to the four coordinate values in the image G01. The same applies to the projector 10(3).

The processing device 150 operating according to the program PR1 executes a processing method of the present disclosure at the opportunity when receiving, from an input device, a signal indicating that input operation for instructing execution of geometric correction has been performed. FIG. 6 is a flowchart illustrating a flow of processing in the processing method of the present disclosure. As illustrated in FIG. 6, the processing method includes processing in steps SA110, SA120, SA130, and SA140.

In step SA110, the processing device 150 operating according to the program PR1 functions as the projection controller 150a and the imaging controller 150b. In the step SA110, the processing device 150 operating according to the program PR1 functions as the projection controller 150a and causes the projection device 120 to project an image of a measurement pattern onto the projection target object SC and, on the other hand, functions as the imaging controller 150b and causes the imaging device 130 to image the projection target object SC onto which the image of the pattern is projected. The user can instruct a correction amount in geometric correction applied to a projection target video for each of the positions of 20×14 correction points by performing input operation of changing the positions of grid points included in the pattern displayed on the projection target object SC.

The processing in step SA120 and subsequent steps is executed at the opportunity when input operation of instructing completion of the pattern change is performed on the input device. In step SA120 following step SA110, the processing device 150 operating according to the program PR1 functions as the image analyzer 150d and the correction value calculator 150e. In step SA120, first, the processing device 150 operating according to the program PR1 functions as the image analyzer 150d and analyzes an image represented by image data acquired from the imaging device 130 to thereby calculate a measurement value representing a measurement result of a three-dimensional shape of the projection target object SC. Subsequently, the processing device 150 functions as the correction value calculator 150e and sets a correction shape corresponding to the measurement value.

In step SA130 following step SA120, the processing device 150 operating according to the program PR1 functions as the correction value calculator 150e. In step SA130, the processing device 150 performs a smoothing operation for smoothing the correction shape such that there is no divided region exceeding the correction limit. Details of the smoothing operation will be clarified below.

In step SA140 following step SA130, the processing device 150 operating according to the program PR1 functions as the correction value calculator 150e and the geometric corrector 150c. In step SA140, first, the processing device 150 operating according to the program PR1 functions as the correction value calculator 150e and calculates a correction value corresponding to the correction shape smoothed in step SA130. Subsequently, the processing device 150 functions as the geometric corrector 150c and executes geometric correction for the projection target video based on the correction value to generate corrected projection target video data.

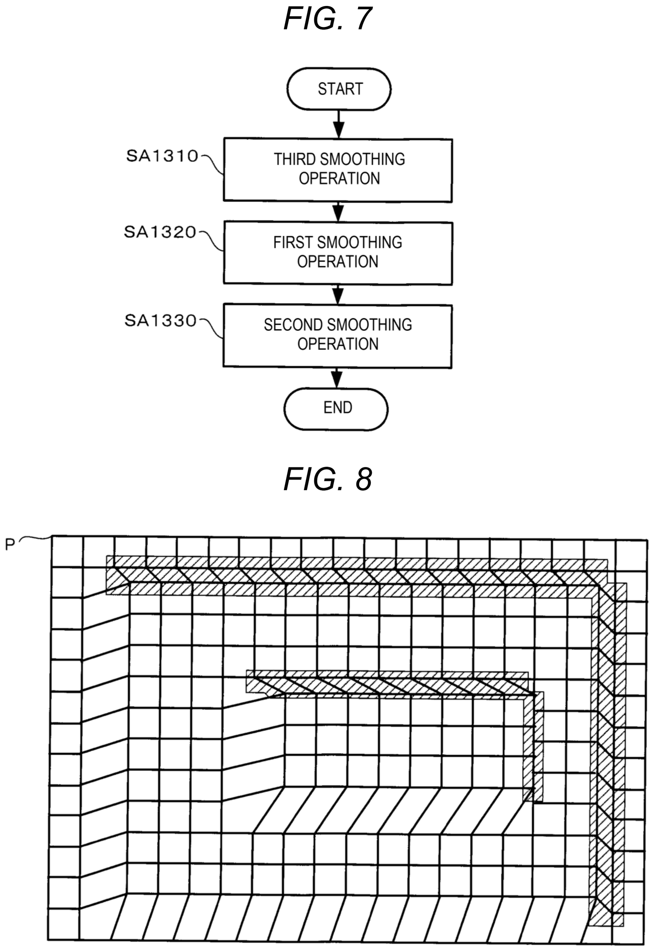

FIG. 7 is a flowchart illustrating a flow of processing in the smoothing operation. As illustrated in FIG. 7, the smoothing operation in the present embodiment includes a third smoothing operation SA1310, a first smoothing operation SA1320, and a second smoothing operation SA1330. In the smoothing operation in the present embodiment, first, the third smoothing operation SA1310 is executed, then the first smoothing operation SA1320 is executed, and the second smoothing operation SA1330 is executed last.

The third smoothing operation SA1310 is an arithmetic operation for smoothing parameters of divided regions determined as the outside of the projection target object SC and parameters of divided regions around the projection target object SC. Since a video is not projected to the outside of the projection target object SC, no matter how much the parameters of the divided regions corresponding to the outside of the projection target object SC are smoothed, there is no influence. The first smoothing operation SA1320 is an arithmetic operation for smoothing a correction shape with respect to a correction point closest to a divided region exceeding the correction limit. The second smoothing operation SA1330 is an arithmetic operation for smoothing a correction shape with respect to a correction point (excluding the closest correction point) present near the divided region exceeding the correction limit. Hereinafter, arithmetic operation content of each of the third smoothing operation SA1310, the first smoothing operation SA1320, and the second smoothing operation SA1330 is explained referring to an example in which divided regions belonging to a range indicated by hatching in FIG. 8 have exceeded the correction limit. In FIG. 8, illustration of the divided regions DR is omitted.

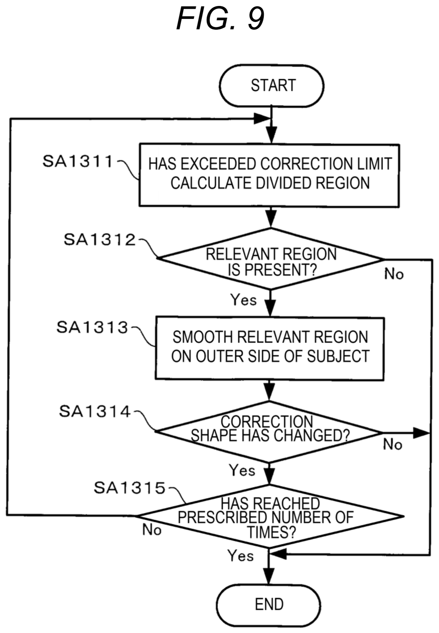

FIG. 9 is a flowchart illustrating a flow of processing in the third smoothing operation SA1310. In step SA1311, for the image G01, the processing device 150 calculates a shape after deformation of a correction shape by the user for each of the divided regions and calculates a divided region, the shape of which after the deformation has exceeded the correction limit. In step SA1311, for the image G02 and the image G03, the processing device 150 calculates a divided region exceeding the correction limit among a plurality of divided regions that divide a correction shape based on a correction value of the image G01 calculated by the correction value calculator 150e into a plurality of regions. In step SA1312 following step SA1311, the processing device 150 determines whether there is a relevant region (a divided region, the shape of which after deformation has exceeded the correction limit). When there is at least one relevant region, a determination result in step SA1312 is "Yes". When there is no relevant region, the determination result in step SA1312 is "No". When the determination result in step SA1312 is "Yes", the processing device 150 executes processing in step SA1313 and subsequent steps. When the determination result in step SA1312 is "No", the processing device 150 ends the third smoothing operation SA1310 without executing the processing in step SA1313 and subsequent steps.

In step SA1313, the processing device 150 smooths a correction shape including the relevant region belonging to the outside of the projection target object SC. The processing device 150 specifies, as a smoothing target first correction point, a correction point closest to the relevant region among four correction points defining the relevant region belonging to the outside of the projection target object SC. Subsequently, the processing device 150 smooths a coordinate value, which corresponds to the specified first correction point (hereinafter, first coordinate value), with moving average based on the first coordinate value and a plurality of coordinate values corresponding one-to-one to a plurality of correction points adjacent to the first correction point. Whether a region is outside the projection target object SC can be determined according to whether a measurement pattern projected by the projection device 120 has been reflected by the projection target object SC and reflected light of the measurement pattern has been successfully measured by the imaging device 130. A region where the measurement pattern has been successfully measured is the inside and the boundary portion of the projection target object SC and a region where the measurement pattern has not been successfully measured is the outer side of the projection target object SC.

In step SA1314 following step SA1313, the processing device 150 determines whether the correction shape after the smoothing has changed as compared with the correction shape before the smoothing is applied. When the correction shape after the smoothing has not changed as compared with the correction shape before the smoothing is applied, a determination result in step SA1314 is "No". The correction shape after the smoothing having not changed as compared with the correction shape before the smoothing is applied includes, besides the correction shape before the smoothing is applied and the correction shape after the smoothing being the same, a value (hereinafter, change amount) corresponding to the difference between the correction shape before the smoothing is applied and the correction shape after the smoothing being equal to or smaller than a threshold. When the correction shape after the smoothing has changed as compared with the correction shape before the smoothing is applied, that is, when the correction shape before the smoothing is applied and the correction shape after the smoothing are not the same and the change amount has exceeded the threshold, the determination result in step SA1314 is "Yes". When the determination result in step SA1314 is "Yes", the processing device 150 executes processing in step SA1315. When the determination result in step SA1314 is "No", the processing device 150 ends the execution of the third smoothing operation SA1310.

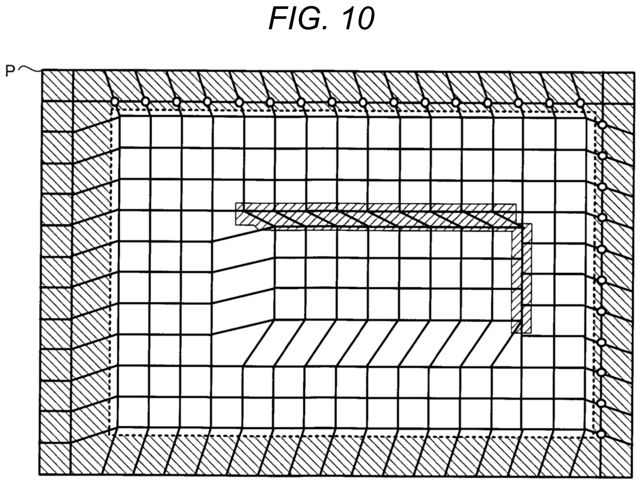

In step SA1315, the processing device 150 determines whether the processing in step SA1313 has been executed a prescribed number of times (in the present embodiment, nineteen times). As the prescribed number of times, a public value is set as appropriate by performing an experiment or the like. When the number of times of execution of the processing in step SA1313 is less than the prescribed number of times, a determination result in step SA1315 is "No". When the number of times of execution of the processing in step SA1313 has reached the prescribed number of times, the determination result in step SA1315 is "Yes". When the determination result in step SA1315 is "No", the processing device 150 executes the processing in step SA1311 and subsequent steps again. When the determination result in step SA1315 is "Yes", the processing device 150 ends the execution of the third smoothing operation SA1310. For example, in an example illustrated in FIG. 10, a region with right-downward hatching is the outer side of the projection target object SC. A correction shape including divided regions belonging to this region and exceeding the correction limit is a smoothing target. Circles in FIG. 10 represent correction points, the positions of which are updated by smoothing the correction shape. In FIG. 10, although divided regions belonging to a region with right-upward hatching have also exceeded the correction limit, since the divided regions are on the inner side of the projection target object SC, a correction shape including the divided regions is not smoothed. In FIG. 10, illustration of the divided regions DR is omitted.

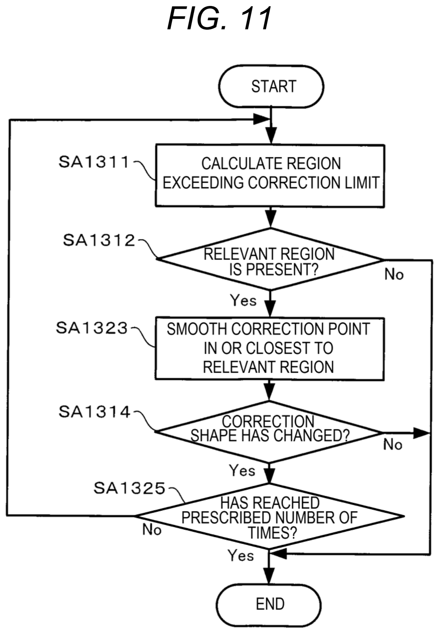

In the first smoothing operation SA1320, the smoothing for the correction shape is executed on a correction point closest to the divided region exceeding the correction limit. FIG. 11 is a flowchart illustrating a flow of processing in the first smoothing operation SA1320. In FIG. 11, the same kinds of processing as the kinds of processing in FIG. 9 are denoted by the same reference signs. As it is evident when FIG. 9 and FIG. 11 are compared, the first smoothing operation SA1320 is different from the third smoothing operation SA1310 in that step SA1323 is provided instead of step SA1313 and step SA1325 is provided instead of step SA1315.

In step SA1323, the processing device 150 specifies, when a correction point is present on the inside of the relevant region (the divided region exceeding the correction limit), the correction point as the first correction point explained above and, when a correction point is absent on the inside of the relevant region, specifies a correction point closest to the position of the relevant region as the first correction point and smooths a coordinate value, which corresponds to the specified first correction point (hereinafter, first coordinate value), with moving average based on the first coordinate value and a plurality of coordinate values corresponding one-to-one to a plurality of correction points adjacent to the first correction point. That is, in step SA1323, a first correction point to be smoothed is determined with respect to one relevant region. By executing the first smoothing operation SA1320, a first coordinate value corresponding to the first correction point, which is a correction point close to the relevant region, is smoothed. The smoothing can be executed on the correction point for which the smoothing is most necessary. However, since a total number of correction points is smaller than a total number of divided regions, the same correction point is sometimes selected as the first correction point with respect to two different relevant regions.

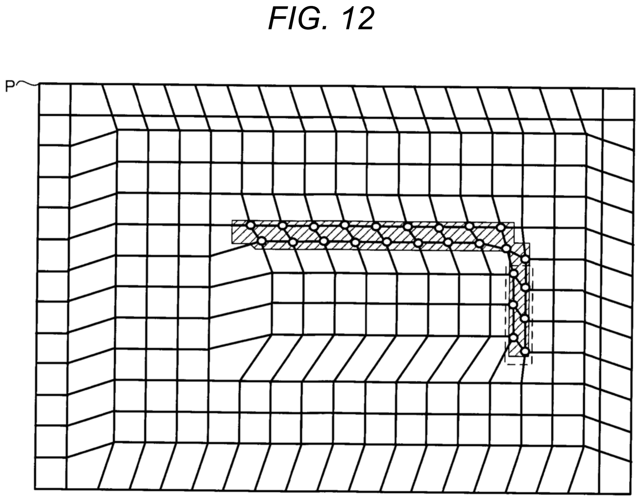

In step SA1325, the processing device 150 determines whether the processing in step SA1323 has been executed a prescribed number of times. When the number of times of execution of the processing in step SA1323 is less than the prescribed number of times, a determination result in step SA1325 is "No". When the number of times of execution of the processing in step SA1323 has reached the prescribed number of times, the determination result in step SA1325 is "Yes". When the determination result in step SA1325 is "No", the processing device 150 executes the processing in step SA1311 and subsequent steps in FIG. 11 again. When the determination result in step SA1325 is "Yes", the processing device 150 ends the execution of the first smoothing operation SA1320. For example, in the example illustrated in FIG. 12, divided regions belonging to a region with right-upward hatching have exceeded the correction limit. Correction point located inside the divided regions or correction points closest to the regions are smoothing targets. Circles in FIG. 12 represent the smoothing target correction points. A rectangle drawn by a dotted line in FIG. 12 represents divided regions that are left exceeding the correction limit even by the first smoothing operation SA1320. In FIG. 12, illustration of the divided regions DR is omitted.

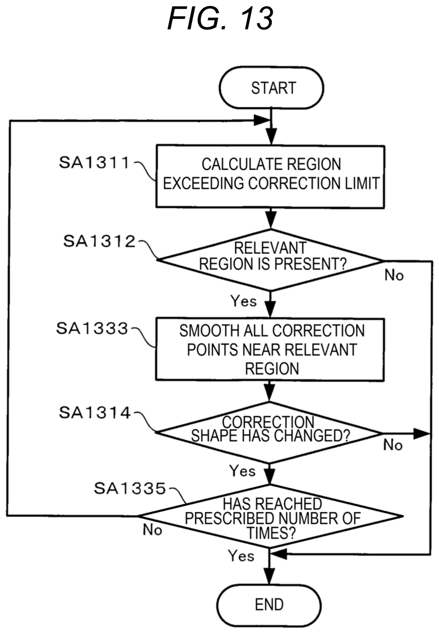

In the second smoothing operation SA1330, smoothing of a correction shape is executed targeting all correction points surrounding divided regions exceeding the correction limit as an example of correction points present near the divided regions DR exceeding the correction limit. FIG. 13 is a flowchart illustrating a flow of processing in the second smoothing operation SA1330. In FIG. 13, the same processing as the processing in FIG. 9 is denoted by the same reference signs. As it is evident when FIG. 9 and FIG. 13 are compared, the second smoothing operation SA 1330 is different from the third smoothing operation SA1310 in that step SA1333 is provided instead of step SA1313 and step SA1335 is provided instead of step SA1315.

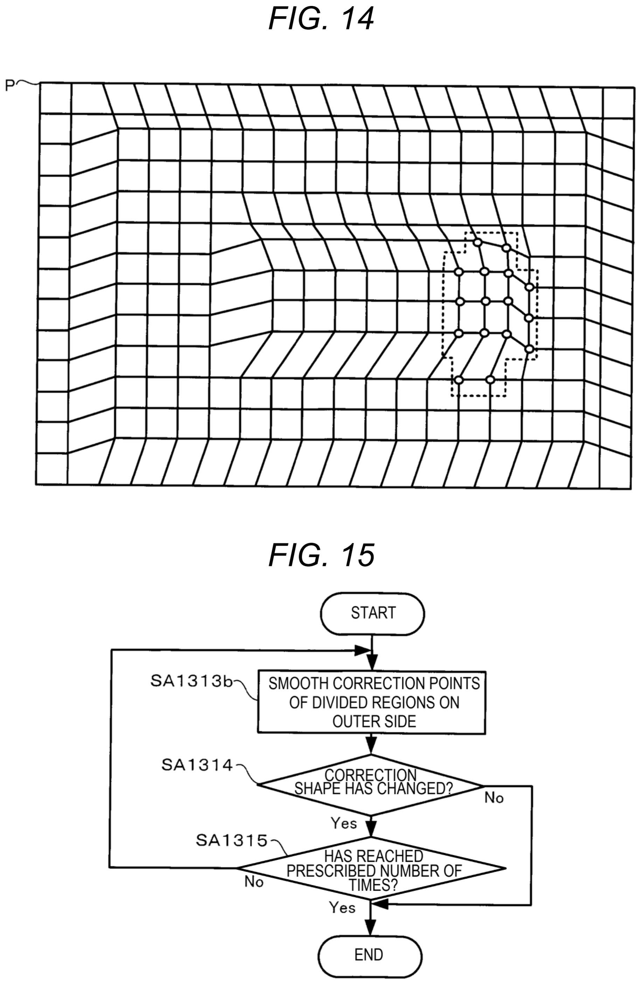

In step SA1333, the processing device 150 performs smoothing on a correction point present near the relevant region. For example, it is sufficient that a plurality of correction points near divided regions are determined in advance, for example, reference coordinates are calculated for the divided regions in an uncorrected state and four correction points surrounding the reference coordinates are determined as near points of the divided region corresponding to the reference coordinates. The reference coordinates may be one of four vertices of the divided region in the uncorrected state or may be a geometric center of the divided region in the uncorrected state. Then, the processing device 150 sets all of the near points of the relevant region as smoothing targets. The processing device 150 specifies a second correction point adjacent to a correction point (a first correction point in the first smoothing operation SA1320) closest to the relevant region among the near points of the relevant region and smooths a second coordinate value, which corresponds to the specified second correction point, by performing moving average based on the second coordinate value and a plurality of coordinate values corresponding one-to-one to a plurality of correction points adjacent to the second correction point. According to this aspect, since the smoothing target is expanded to the second coordinate value of the second correction point adjacent to the first correction point, the plurality of coordinate values after the smoothing are smoother as compared with when only the first correction point is smoothed. The smoothing may be performed by, such that contribution of a coordinate value of, of the second correction point, which is one of the plurality of correction points adjacent to the first correction point, and the first correction point, a correction point located near the divided region exceeding the correction limit is larger than contribution of a coordinate value of the other, setting a weighted average of the coordinate values as a new coordinate value of a correction point corresponding thereto. FIG. 14 is a diagram illustrating an example of the smoothing target correction points in the second smoothing operation SA1330. A rectangle drawn by a dotted line in FIG. 14 represents divided regions exceeding the correction limit and divided regions surrounding the divided regions and circles in FIG. 14 represent correction points to be smoothed.

In step SA1335, the processing device 150 determines whether the processing in step SA1333 has been executed a prescribed number of times. When the number of times of execution of the processing in step SA1333 is less than the prescribed number of times, a determination result in step SA1335 is "No". When the number of times of execution of the processing in step SA1333 has reached the prescribed number of times, the determination result in step SA1335 is "Yes". When the determination result in step SA1335 is "No", the processing device 150 executes the processing in step SA1311 and subsequent steps in FIG. 13 again. When the determination result in step SA1335 is "Yes", the processing device 150 ends the execution of the second smoothing operation SA1330.

According to the present embodiment, when stacking adjustment is performed in projection mapping on the projection target object SC that is not flat like a building, it is possible to minimize the influence of the stacking on overlay accuracy and avoid the correction limit of the geometric correction circuit.

### B. Modifications

The embodiment explained above can be modified as follows.
(1) The third smoothing operation SA1310 in the embodiment explained above is the arithmetic operation for smoothing the correction shape targeting the divided region belonging to the outside of the projection target object SC and having the shape after deformation exceeding the correction limit. However, the third smoothing operation SA1310 may be an arithmetic operation for performing, regardless of whether the divided region has a shape after deformation exceeding the correction limit, smoothing targeting a divided region belonging to the outside of the projection target object SC. FIG. 15 is a flowchart illustrating a flow of processing in the third smoothing operation SA1310 in an aspect in which, regardless of whether the shape after deformation is a divided region exceeding the correction limit, smoothing is performed targeting a divided region belonging to the outside of the projection target object SC. In FIG. 15, the same processing as the processing in FIG. 9 is denoted by the same reference signs as those in FIG. 9. As it is evident when FIG. 15 and FIG. 9 are compared, the third smoothing operation SA1310 according to this modification is different from the third smoothing operation SA1310 in the embodiment explained above in that the third smoothing operation SA1310 does not include the processing in step SA1311 and step SA1312 and includes the processing in step SA1313b instead of the processing in step SA1313. In step SA1313b, the processing device 150 performs smoothing targeting correction points near a divided region belonging to the outside of the projection target object SC. This is because, since a video is not projected to the outside of the projection target object SC, there is no influence no matter how much a correction shape of a region corresponding to the outside of the projection target object SC is smoothed. By omitting the processing in step SA1311 and step SA1312, a processing load in executing the third smoothing operation SA1310 is reduced.
(2) The smoothing operation in the embodiment explained above includes the third smoothing operation SA1310, the first smoothing operation SA1320, and the second smoothing operation SA1330. However, the smoothing operation in the present disclosure only has to include at least one of the third smoothing operation SA1310, the first smoothing operation SA1320, and the second smoothing operation SA1330. That is, the smoothing operation in the present disclosure only has to be an arithmetic operation for specifying a first correction region closest to a first divided region, which is a divided region exceeding the correction limit, among a plurality of correction shapes and smoothing a first coordinate value, which corresponds to a first correction point that is one of at least four correction points defining the first correction region, based on the first coordinate value and a plurality of coordinate values corresponding one-to-one to the plurality of correction points adjacent to the first correction point.
(3) The projection controller 150a, the imaging controller 150b, the geometric corrector 150c, the image analyzer 150d, and the correction value calculator 150e in the embodiment explained above are software modules. However, at least one of the projection controller 150a, the imaging controller 150b, the geometric corrector 150c, the image analyzer 150d, and the correction value calculator 150e may be a hardware module such as an application specific integrated circuit (ASIC). Even when at least one of the projection controller 150a, the imaging controller 150b, the geometric corrector 150c, the image analyzer 150d, and the correction value calculator 150e is a hardware module, the same effects as the effects of the embodiment explained above are achieved.
(4) In the embodiment explained above, the processing device 150 provided in the projector 10 functions as the projection controller 150a, the imaging controller 150b, the geometric corrector 150c, the image analyzer 150d, and the correction value calculator 150e. However, by installing the program PR1 in advance in an information processing apparatus (for example, a smartphone or a tablet terminal) including a communication device that communicates with the projector 10 and a processing device such as a processor and causing the processing device of the information processing apparatus to operate according to the program PR1, the processing device may function as the projection controller 150a, the imaging controller 150b, the geometric corrector 150c, the image analyzer 150d, and the correction value calculator 150e.
(5) The program PR1 may be manufactured alone and may be provided for a fee or free of charge. Specific aspects when providing the program PR1 include an aspect in which the program PR1 is provided by being written in a computer-readable recording medium such as a flash ROM and an aspect in which the program PR1 is provided by being downloaded through an electric communication line such as the Internet.

### C. Summary of the present disclosure

The present disclosure is not limited to the embodiment and the modifications explained above and can be implemented in various aspects without departing from the gist of the present disclosure. For example, the present disclosure can also be implemented by the following aspects. Technical features in the embodiment explained above corresponding to technical features in the aspects described below can be replaced or combined as appropriate in order to solve some or all of the problems of the present disclosure or in order to achieve some or all of the effects of the present disclosure. Unless the technical features are explained as essential technical features in the present specification, the technical features can be deleted as appropriate.

A summary of the present disclosure is appended below.

### Appendix 1

According to an aspect of the present disclosure, there is provided a processing method including one or a plurality of processors: projecting an image onto a target with a projector; acquiring a plurality of coordinate values corresponding one-to-one to a plurality of correction points respectively defining a plurality of correction regions for correcting a shape of the image in a coordinate system of a light modulation element; calculating, based on the plurality of coordinate values, a parameter for correcting the shape for each of a plurality of divided regions that divide an inside of each of the plurality of correction regions; specifying, among the plurality of correction regions, a first correction region closest to a first divided region having a parameter exceeding a threshold among the plurality of divided regions; and executing a smoothing operation for smoothing a first coordinate value, which corresponds to a first correction point among at least four correction points defining the first correction region, based on the first coordinate value and a plurality of coordinate values corresponding one-to-one to the plurality of correction points adjacent to the first correction point. With the processing method of this aspect, by appropriately smoothing the coordinate values of the correction points with the one or the plurality of processors, it is possible to prevent the shape of the image being deteriorated.

### Appendix 2

A processing method according to a more preferable aspect of the present disclosure is the processing method described in Appendix 1, wherein the executing the smoothing operation includes: specifying a correction point closest to the first divided region among the at least four correction points as the first correction point; and executing a first smoothing operation for smoothing the first coordinate value corresponding to the specified first correction point based on the first coordinate value and a plurality of coordinate values corresponding one-to-one to a plurality of correction points adjacent to the first correction point. According to this aspect, by smoothing the first coordinate value corresponding to the first correction point that is the correction point close to the first divided region, it is possible to execute the first smoothing operation on a correction point for which smoothing is most necessary.

### Appendix 3

A processing method according to a still more preferable aspect of the present disclosure is the processing method described in Appendix 1 or Appendix 2, wherein the executing the smoothing operation includes: specifying a second correction point (an enlargement target correction point) adjacent to the specified first correction point among the at least four correction points after executing the first smoothing operation; and executing a second smoothing operation for smoothing a second coordinate value corresponding to the specified second correction point based on the second coordinate value and a plurality of coordinate values corresponding one-to-one to a plurality of correction points adjacent to the second correction point. According to this aspect, by enlarging a smoothing target to the second coordinate value of the second correction point adjacent to the first correction point that is the correction point close to the first divided region, the plurality of coordinate values after smoothing becomes smoother as compared with when only the first correction point is smoothed.

### Appendix 4

A processing method according to another preferable aspect of the present disclosure is the processing method described in Appendix 1, Appendix 2, or Appendix 3, further including recalculating the parameter for correcting the shape for each of the plurality of divided regions after executing the smoothing operation. According to this aspect, it is possible to optimize the parameter in the first correction region as well.

### Appendix 5

A processing method according to another preferable aspect of the present disclosure is the processing method described in Appendix 1, Appendix 2, Appendix 3, or Appendix 4, wherein the image overlaps at least a part of another image projected from another projector different from the projector, the first correction region is a region in an overlapping region where the image overlaps at least a part of the other image, and at least four coordinate values (before smoothing) corresponding one-to-one to the at least four correction points are determined to coincide with at least four other coordinate values corresponding one-to-one to the at least four other correction points in the other image. According to this aspect, when the at least four coordinate values before smoothing are determined to coincide with the at least four other coordinate values, it is possible to execute the smoothing operation.

### Appendix 6

A processing method according to another preferable aspect of the present disclosure is the processing method described in Appendix 1, Appendix 2, Appendix 3, Appendix 4, or Appendix 5, wherein the executing of the smoothing operation includes setting contribution to the smoothing of the second correction point and the first correction point, a correction point located near the first divided region larger than contribution of another correction point. According to this aspect, it is possible to set the contribution to the smoothing of, of the first correction point and the second correction point, the correction point located near the first divided region larger than contribution of the other. While it is possible to apply appropriate processing to a correction point relatively close to the first divided region, that is, a correction point that should be preferentially smoothed, by setting contribution of a correction point having a low degree of priority of smoothing to be relatively low, it is possible to prevent the shape of the image from being rather deteriorated by the smoothing.

### Appendix 7

According to an aspect of the present disclosure, there is provided an information processing apparatus including: a communication apparatus configured to communicate with a projector; and a processing apparatus, wherein the processing apparatus executes: projecting an image onto a target with the projector; acquiring a plurality of coordinate values corresponding one-to-one to a plurality of correction points respectively defining a plurality of correction regions for correcting a shape of the image in a coordinate system of a light modulation element; calculating, based on the plurality of coordinate values, a parameter for correcting the shape for each of a plurality of divided regions that divide an inside of each of the plurality of correction regions; specifying, among the plurality of correction regions, a first correction region closest to a first divided region having a parameter exceeding a threshold among the plurality of divided regions; and executing a smoothing operation for smoothing a first coordinate value, which corresponds to a first correction point among at least four correction points defining the first correction region, based on the first coordinate value and a plurality of coordinate values corresponding one-to-one to the plurality of correction points adjacent to the first correction point. According to this aspect, as in the processing method described in Appendix 1, by smoothing the first coordinate value corresponding to the first correction point that is the correction point close to the first divided region, it is possible to execute the first smoothing operation on a correction point for which smoothing is most necessary.

### Appendix 8

According to an aspect of the present disclosure, there is provided a non-transitory computer-readable storage medium storing a program for causing a computer to execute: projecting an image onto a target with a projector; acquiring a plurality of coordinate values corresponding one-to-one to a plurality of correction points respectively defining a plurality of correction regions for correcting a shape of the image in a coordinate system of a light modulation element; calculating, based on the plurality of coordinate values, a parameter for correcting the shape for each of a plurality of divided regions that divide an inside of each of the plurality of correction regions; specifying, among the plurality of correction regions, a first correction region closest to a first divided region having a parameter exceeding a threshold among the plurality of divided regions; and executing a smoothing operation for smoothing a first coordinate value, which corresponds to a first correction point among at least four correction points defining the first correction region, based on the first coordinate value and a plurality of coordinate values corresponding one-to-one to the plurality of correction points adjacent to the first correction point. According to this aspect, as in the processing method described in Appendix 1 and the information processing apparatus described in Appendix 7, by smoothing the first coordinate value corresponding to the first correction point that is the correction point close to the first divided region, it is possible to execute the first smoothing operation on a correction point for which smoothing is most necessary.

## Claims

1. A processing method comprising one or a plurality of processors:
projecting an image onto a target with a projector;
acquiring a plurality of coordinate values corresponding one-to-one to a plurality of correction points respectively defining a plurality of correction regions for correcting a shape of the image in a coordinate system of a light modulation element;
calculating, based on the plurality of coordinate values, a parameter for correcting the shape for each of a plurality of divided regions that divide an inside of each of the plurality of correction regions;
specifying, among the plurality of correction regions, a first correction region closest to a first divided region having a parameter exceeding a threshold among the plurality of divided regions; and
executing a smoothing operation for smoothing a first coordinate value, which corresponds to a first correction point among at least four correction points defining the first correction region, based on the first coordinate value and a plurality of coordinate values corresponding one-to-one to the plurality of correction points adjacent to the first correction point.

2. The processing method according to claim 1, wherein the executing the smoothing operation includes:
specifying a correction point closest to the first divided region among the at least four correction points as the first correction point; and
executing a first smoothing operation for smoothing the first coordinate value corresponding to the specified first correction point based on the first coordinate value and a plurality of coordinate values corresponding one-to-one to a plurality of correction points adjacent to the first correction point.

3. The processing method according to claim 2, wherein the executing the smoothing operation includes:
specifying a second correction point adjacent to the specified first correction point among the at least four correction points after executing the first smoothing operation; and
executing a second smoothing operation for smoothing a second coordinate value corresponding to the specified second correction point based on the second coordinate value and a plurality of coordinate values corresponding one-to-one to a plurality of correction points adjacent to the second correction point.

4. The processing method according to any one of claims 1 to 3, further comprising recalculating the parameter for correcting the shape for each of the plurality of divided regions after executing the smoothing operation.

5. The processing method according to any one of claims 1 to 4, wherein the image overlaps at least a part of another image projected from another projector different from the projector,
the first correction region is a region in an overlapping region where the image overlaps at least a part of the other image, and
at least four coordinate values corresponding one-to-one to the at least four correction points are determined to coincide with at least four other coordinate values corresponding one-to-one to the at least four other correction points in the other image.

6. The processing method according to claim 3, wherein the executing of the smoothing operation includes setting contribution to the smoothing of the second correction point and the first correction point, a correction point located near the first divided region larger than contribution of another correction point.

7. An information processing apparatus comprising:
a communication apparatus configured to communicate with a projector; and
a processing apparatus, wherein
the processing apparatus executes:
projecting an image onto a target with the projector;
acquiring a plurality of coordinate values corresponding one-to-one to a plurality of correction points respectively defining a plurality of correction regions for correcting a shape of the image in a coordinate system of a light modulation element;
calculating, based on the plurality of coordinate values, a parameter for correcting the shape for each of a plurality of divided regions that divide an inside of each of the plurality of correction regions;
specifying, among the plurality of correction regions, a first correction region closest to a first divided region having a parameter exceeding a threshold among the plurality of divided regions; and
executing a smoothing operation for smoothing a first coordinate value, which corresponds to a first correction point among at least four correction points defining the first correction region, based on the first coordinate value and a plurality of coordinate values corresponding one-to-one to the plurality of correction points adjacent to the first correction point.

8. A non-transitory computer-readable storage medium storing a program for causing a computer to execute:
projecting an image onto a target with a projector;
acquiring a plurality of coordinate values corresponding one-to-one to a plurality of correction points respectively defining a plurality of correction regions for correcting a shape of the image in a coordinate system of a light modulation element;
calculating, based on the plurality of coordinate values, a parameter for correcting the shape for each of a plurality of divided regions that divide an inside of each of the plurality of correction regions;
specifying, among the plurality of correction regions, a first correction region closest to a first divided region having a parameter exceeding a threshold among the plurality of divided regions; and
executing a smoothing operation for smoothing a first coordinate value, which corresponds to a first correction point among at least four correction points defining the first correction region, based on the first coordinate value and a plurality of coordinate values corresponding one-to-one to the plurality of correction points adjacent to the first correction point.
